# EUROPÄISCHE PATENTSCHRIFT

(11) **EP 1 325 059 B1**
(45) Veröffentlichungstag und Bekanntmachung des Hinweises auf die Patenterteilung: **13.07.2005**
(21) Anmeldenummer: 01965271.8
(22) Anmeldetag: 10.09.2001
(51) Int. Cl.: C08G 77/392, C07F 7/18, C08L 21/00, C08K 5/548

(54) **FLÜSSIGE SCHWEFELHALTIGE OLIGOSILOXANE UND IHRE VERWENDUNG IN KAUTSCHUKMISCHUNGEN**
LIQUID OLIGOSILOXANE CONTAINING SULPHUR AND THE USE THEREOF IN RUBBER MIXTURES
OLIGOSILOXANES LIQUIDES CONTENANT DU SOUFRE ET LEUR UTILISATION DANS DES MELANGES DE CAOUTCHOUC

(30) Priorität: 11.09.2000 DE 10044989
(43) Veröffentlichungstag der Anmeldung: 09.07.2003
(73) Patentinhaber: Bayer Aktiengesellschaft, 51368 Leverkusen (DE)
(72) Erfinder: GRABOWSKI, Stefan, 41539 Dormagen (DE); WEIDENHAUPT, Hermann-Josef, 50259 Pulheim (DE); ACKERMANN, Jürgen, 51381 Leverkusen (DE)
(86) Internationale Anmeldenummer: PCT/EP2001/010421
(87) Internationale Veröffentlichungsnummer: WO 2002/020643

(56) Entgegenhaltungen:
- EP-A- 0 997 489
- US-A- 4 269 991

## Beschreibung

Die Erfindung betrifft bei -25-100°C flüssige, schwefelhaltige Oligosiloxane, Verfahren zu deren Herstellung und ihre Verwendung in schwefelvernetzbaren kieselsäurehaltigen Kautschukmischungen.

Zur Herstellung von schwefelvernetzten Kautschukmischungen mit geringem Verlustfaktor in der mechanischen Dämpfung sind vielfach Mischungen vorgeschlagen worden, in denen Polymere mit verstärkenden Kieselsäuren sowie schwefelhaltigen Silanen compoundiert werden.

Mit derartigen dämpfungsarmen Kautschuken lassen sich z.B. rollwiderstandsarme Reifen herstellen. Hierbei stellen die besonderen Anforderungen bei der Mischungsherstellung (Viskositätsniveau), die zusätzlich notwendigen Gummieigenschaften, wie Abrieb, Naßrutschfestigkeit, sowie das gewünschte Vernetzungsverhalten (Scorchsicherheit) erhebliche Anforderungen sowohl an die Polymeren als auch die Füllstoffe und das Vernetzungssystem.

Die Herstellung und die Verwendung von schwefelhaltigen Alkylsilanen ist Stand der Technik, vgl. US-A-4 100 172, DD-A5-299 187, DE-A1-2 856 229, EP-A1-466 066 und EP-A1-731 824.

DE-A 28 37 117 beschreibt die Kombination von sulfidhaltigen Silanen und/oder Mercapto- oder Alkenylalkoxysilanen in kieselsäurehaltigen Kautschukmischungen als vorteilhaft zur Erhöhung der Heißluftstabilität, insbesondere von EPDM. DE-A 29 33 247 beschreibt den Einsatz von Siloxanen mit SiOH, bzw. SiOR-Gruppen in Kautschukmischungen mit Kieselsäure.

US-A 4 474 908 beschreibt die Kombination von einem vernetzungsaktiven mit einem vernetzungsinaktiven Methylalkoxysilan um Viskosität und Scorch von Kautschukmischungen zu verbessern.

JP-B 62 48 116 beschreibt Kautschukmischungen aus Polymer, Ruß und mit Methylhydrogensiloxanen und schwefelhaltigen Silanen behandelten Kieselsäuren.

EP-A2-761 748 beschreibt die Verbesserung des Viskositätsverhaltens von kieselsäurehaltigen Mischungen durch Zumischen von Siloxanen mit Wasserstoffatomen, Alkoxy- und Acyloxygruppen und gegebenenfalls schwefelhaltigen Silanen. Die Kettenlängen der Siloxane liegt hier bei einem Polymerisationsgrad von ca. 40 das Verhältnis der Alkenyl- bzw. Hydrogen-Siloxanreste zu den Methylalkoxysiloxanresten liegen zwischen 10:90 bis 21:79. EP-A2 784 072 beschreibt ebenfalls Mischungen aus Siloxanen und schwefelhaltigen Silanen um die Viskosität der Mischung abzusenken.

In WO96/16125 und WO99/02580 werden ebenfalls funktionalisierte Polyorganosiloxane sowie deren Herstellung und Verwendung in Kautschukmischungen beschrieben, wobei die Siloxanketten eine Länge von bis zu 300 siloxy-einheiten haben können. Weiterhin werden schwefelfunktionelle Polyorganosiloxane, deren Herstellung und diese enthaltende Kautschukmischungen in EP-A2-964 021 und EP-A2-997 489 beschrieben.

Es ist also Stand der Technik, Mischungen aus Siloxanen und schwefelhaltigen Silanen einzusetzen. Dies beinhaltet folgende Nachteile: Erstens müssen die Stoffe beim Kunden durch einen Mischschritt sehr genau abgemischt werden und zweitens werden durch die Alkoxy- bzw. Acyloxy-Reste der Siloxane große Mengen unerwünschter Alkohole während der Verarbeitung frei, was ökologisch bedenklich ist.

Weiterhin ist es Stand der Technik, schwefelhaltige Oligosiloxane herzustellen. Dies beinhaltet jedoch folgende Nachteile: Die direkte Herstellung aus Alkenyl-Oligosiloxanen und Schwefel nach den bekannten Schwefelungsverfahren führt zu hochviskosen und/oder vergelten Produkten. Andere Verfahren sind bedeutend aufwendiger.

Es bestand daher die Aufgabe, eine leicht dosierbare und homogen mischbare Mischung aus Alkoxysiloxan und Schwefelspendern zur Verfügung zu stellen, die die Nachteile des Standes der Technik zumindest teilweise nicht aufweist.

Die Aufgabe wird erfindungsgemäß durch schwefelhaltige Siloxane der allgemeinen Formel (I) 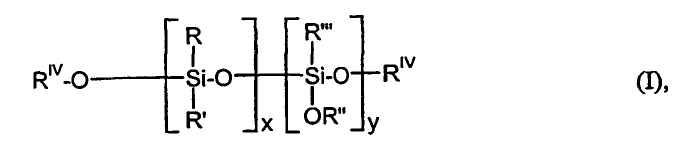 worin
- R und R": unabhängig voneinander für einen C₁-C₂₄-Alkylrest, einen C₆-C₂₄-Arylrest oder R'" steht,

- R': für einen schwefelhaltigen 2-(p-Methylcyclohexyl)propylrest, einen schwefelhaltigen 2-Cyclohexylethylrest, einen schwefelhaltigen 2-Norbornylethylrest, einen schwefelhaltigen 2-Norbornylpropylrest, einen schwefelhaltigen C₄-C₂₄-Alkylrest oder einen schwefelhaltigen Dicyclopentylrest steht,
- R''': für R, OR oder H steht, wobei die Reste R und R''' gleich oder verschieden sein können
- R^{IV}: für R, SiR₃''' oder H steht, wobei die Reste R, R''' und R^{IV} gleich oder verschieden sein können,
die Summe von x und y eine Zahl im Bereich von 2 bis 200 darstellt, und
mit der Maßgabe, daß stets nur ein Rest R' pro Siloxan-Molekül vorhanden ist, gelöst.

Schwefelhaltig bedeutet hierbei, daß die entsprechenden Reste enstanden sind durch die Umsetzung einer Doppelbindung mit Schwefel und/oder Schwefelwasserstoff. Somit tragen die schwefelhaltigen Reste -SH, Sx oder andere Schwefelsubstituenten. Diese können gegebenenfalls auch assoziativ an die Doppelbindung koordiniert sein. Sx bedeutet hierbei Schwefelketten oder -ringe mit einer Länge im Bereich von 1-100 Schwefelatomen.

Falls R' einen schwefelhaltigen C₄-C₂₄-Alkylrest darstellt, so stellt das C₄-C₂₄-Alkyl z.B. ein Butan, Pentan, Hexan, Heptan, Octan oder Nonanrest, bevorzugt ein Butan, Hexan oder Octan dar.

R und R" stehen für einen C₁-C₂₄-Alkylrest, der in linerarer, verzweigter oder auch cyclischer Struktur vorliegen kann, wie Methyl-, Ethyl-, Propyl-, Butyl-, Pentyl-, Hexyl-, Cyclopentyl-, Cyclohexyl- oder tert.-Butylreste. Für R und R" werden bevorzugt Methyl-, Ethyl-, Propyl-, Cyclopentyl-, Cyclohexyl- und tert.-Butylreste, besonders bevorzugt Methyl-, Ethyl-, Cyclohexyl- und tert.-Butylreste. Die Alkylreste können auch halogensubstituiert sein, bevorzugt werden Cl-methyl- und Cl-propylreste.

R und R" können auch für einen C₆-C₂₄-Arylrest, der seinerseits mit obengenanten C₁-C₂₄-Alkylresten oder anderen Arylresten substituiert sein kann, wie Phenyl-, Cyclopentadienyl-, Naphthyl-, Methyl-phenyl-, Ethylphenyl- oder tert.-Butylphenylrest stehen. Besonders bevorzugt werden Phenylreste.

Selbstverständlich können obengenannte Alkylreste ihrerseits auch wieder mit Arylresten substituiert sein, wie Phenylmethyl-, Phenylethyl- oder auch Triphenylmethylreste.

Die Summe von x und y stellt eine Zahl im Bereich von 2 bis 200 dar, bevorzugt 2 bis 50, besonders bevorzugt 2 bis 20, ganz besonders bevorzugt 2 bis 10 dar.

Das Verhältnis von x zu y ist bevorzugt gleich oder größer als 1:1, z.B. 1:2, 1:3, 1:4, und so fort.

Selbstverständlich können die x Elemente der Struktur [RR'SiO] und die y Elemente der Struktur [OR"R"'SiO] entlang der Siloxankette jeweils als Block, sequenzartig angeordnet, regelmäßig angeordnet oder statistisch verteilt sein.

Falls R^{IV} = H oder OR ist, können cyclische Kondensate entstehen. Wenn an beiden Kettenenden R^{IV} = H ist, entstehen solche Kondensate im Gemisch spontan unter Abspaltung von Wasser. Wenn am einen Kettenende R^{IV} = H, am anderen Kettenende R^{IV} = OR ist, entstehen solche Kondensatze im Gemisch spontan unter Abspaltung des Alkohols ROH. Wenn an beiden Kettenenden R^{IV} = OR, entstehen solche Kondensate im Gemisch in Gegenwart von Katalysatoren und/oder Wasser, z.B. Luftfeuchtigkeit, unter Abspaltung des Alkohols ROH.

Besonders bevorzugt liegt das Verhältnis von x:y bei 1:1 oder 1:2.

Die Aufgabe wird weiterhin erfindungsgemäß durch schwefelhaltige Siloxane (Ia) gelöst, die aus folgenden Struktureinheiten (K), (L), (M), (N) aufgebaut sind, 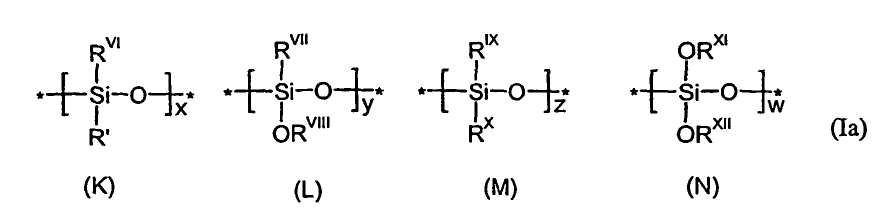 worin
- R^{VI}: für einen C₁-C₂₄-Alkylrest, einen C₆-C₂₄-Arylrest, einen C₁-C₂₄-Alkoxyrest, einen C₆-C₂₄-Aryloxyrest, H oder OH steht,
- R': die oben angegebene Bedeutung besitzt,
- R^{VII}, R^{VIII}, R^{IX}, R^{X}, R^{XI} und R^{XII}: unabhängig voneinander für einen C₁-C₂₄-Alkylrest, einen C₆-C₂₄-Arylrest oder H steht,
für x und y die oben angegebenen Beschränkungen gelten,
w und z jeweils unabhängig voneinander eine Zahl zwischen 0 und 100 sein kann.

Die einzelnen Struktureinheiten können in beliebiger Anordnung aufeinander folgen und linear oder cyclisch angeordnet sein. Falls eine lineare Kette vorliegt, können zusätzlich Kettenendgruppen R^{IV} und OR^{IV} vorhanden sein, wobei R^{IV} die oben angegebene Bedeutung besitzt.

Die erfindungsgemäßen schwefelhaltigen Siloxane der Struktur (I) können entweder als reine Stoffe oder als Gemische verschiedener Stoffe vorliegen. Ebenso können auch die erfindungsgemäße schwefelhaltigen Siloxane der Struktur (Ia) entweder als reine Stoffe oder als Gemische verschiedener Stoffe vorliegen. Selbstverständlich können auch Gemische aus Siloxanen der Struktur (I) mit solchen der Struktur (Ia) vorliegen.

Die erfindungsgemäßen schwefelhaltigen Siloxane lassen sich analog zu bekannen Verfahren, wie in US-A-4100 172 oder DE-A-4 435 311 beschrieben, herstellen.

Die erfindungsgemäßen schwefelhaltigen Siloxane lassen sich jedoch vorteilhaft aus Siloxanen der allgemeinen Formel (II) und/oder (IIa) 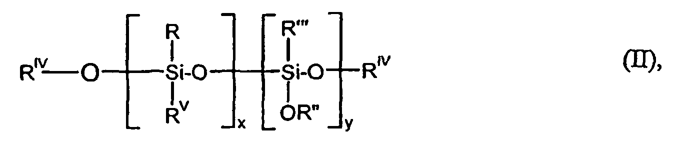 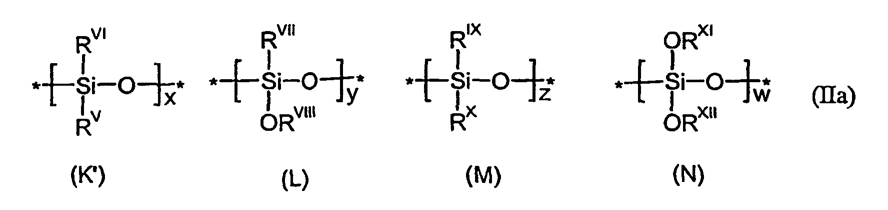 herstellen, wobei
- R, R", R"', R^{IV}, R^{VI}, R^{VII}, R^{VIII}, R^{IX}, R^{X}, R^{XI} und R^{XII}: die bereits genannten Reste darstellen,
- w und z: die genannte Bedeutung besitzen und
- R^{V}: für einen Limonylrest, einen Ethylencyclcohexenrest, einen Ethylennorbornenylrest bzw. Norbornylethyliden-, bzw. Norbornylvinylrest, einen C₄-C₂₄-Alkenylrest oder einen Bicyclopentenylrest steht und
für die Summe von x und y die bereits definierten Einschränkung gilt, mit der Maßgabe, daß stets nur ein Rest R^{V} pro Molekül vorhanden ist, wobei die Siloxane der allgemeinen Formel (II) und/oder (IIa) mit elementarem Schwefel oder mit einem Gemisch aus Schwefel und Schwefelwasserstoff in Gegenwart eines Katalysators umgesetzt werden.

Die Siloxane der Struktur (II) können entweder als reine Stoffe oder als Gemische verschiedener Stoffe vorliegen. Ebenso können auch die Siloxane der Struktur (IIa) entweder als reine Stoffe oder als Gemische verschiedener Stoffe vorliegen. Selbstverständlich können auch Gemische aus Siloxanen der Struktur (II) mit solchen der Struktur (IIa) vorliegen.

Der elementare Schwefel wird in Mengen im Bereich von 1 bis 8 Mol Schwefel pro Mol R^{V} eingesetzt, bevorzugt in Mengen im Bereich von 1 bis 6 Mol Schwefel pro Mol R^{V}, besonders bevorzugt 1 bis 4 Mol Schwefel pro Mol R^{V}.

Falls Mischungen aus Schwefel und Schwefelwasserstoff verwendet werden, so werden diese ebenfalls in Mengen von 1 bis 8 Mol Gesamtschwefel pro Mol R^{V}, bevorzugt 1 bis 6 Mol Gesamtschwefel pro Mol R^{V}, besonders bevorzugt 1 bis 4 Mol Gesamtschwefel pro Mol R^{V} eingesetzt. Das Verhältnis von Schwefel zu H₂S beträgt 1:0,01-1, insbesondere 1: 0,2.

Als Katalysator können Amine, Mercaptobenzthiazol, Salze wie in WO87/00833 S. 6, Z.24 ff. beschrieben, Dischwefeldichlorid oder andere dem Fachmann bekannte Katalysatoren verwendet werden, die die Anlagerung von Schwefel an Doppelbindungen katalysieren. Siehe hierzu z.B. EP-A2-531 842, EP-A1-25 944, DE 21 11 842. Bevorzugt werden jedoch Amine, wie tertiäre C₁₂-C₁₄-Amine oder Mercaptobenzthiazol oder Dischwefeldichlorid verwendet.

Der Katalysator wird in Mengen im Bereich von 0,001 bis 0,1 Mol pro Mol Schwefel, insbesondere 0,005 bis 0,01 Mol pro Mol Schwefel eingesetzt. Selbstverständlich können auch Gemische von Katalysatoren eingesetzt werden.

Die Reaktion der Siloxane (II) und/oder (IIa) mit Schwefel oder Schwefel/H₂S in Gegenwart eines Katalysators kann in jeder dem Fachmann bekannten geeigneten Apparatur durchgeführt werden. Vorteilhaft ist es, für eine gute Durchmischung zu sorgen.

Die Reaktion wird bei Temperaturen im Bereich von 0 bis 200°C, bevorzugt 120-180°C, besonders bevorzugt 120-160° durchgeführt.

Die Reaktion wird bei Drücken im Bereich von 0 bis 100 bar, bevorzugt 0-30, besonders bevorzugt 0,5-15 durchgeführt.

Das beschriebene Verfahren zur Umsetzung der Siloxane der allgemeinen Formel (II) und/oder (IIa) mit Schwefel oder Schwefel/H₂S stellt einen weiteren Gegenstand der Erfindung dar.

Die Siloxane der Formel (II) und/oder (IIa) lassen sich im Prinzip nach den üblichen in der Literatur beschriebenen Verfahren herstellen. Siehe z.B. EP-A1-259 625, EP-A1-4310 und EP-A1-3514.

Die Siloxane der allgemeinen Formel (II) lassen sich vorteilhaft aus Siloxanen der allgemeinen Formel (III) 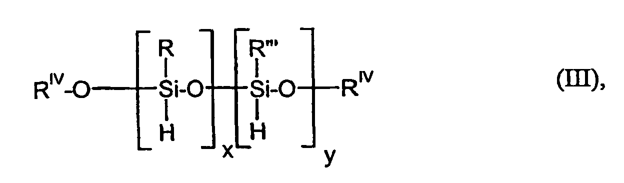 herstellen, wobei die Reste die bereits genannte Bedeutung besitzen und
- x+y: eine Zahl im Bereich von 2-200, bevorzugt 2-50, besonders bevorzugt 2-20, ganz besonders bevorzugt 2-10 darstellt.

Entsprechend lassen sich die Siloxane der allgemeinen Formel (IIa) vorteilhaft aus Siloxanen der allgemeinen Formel (IIIa) 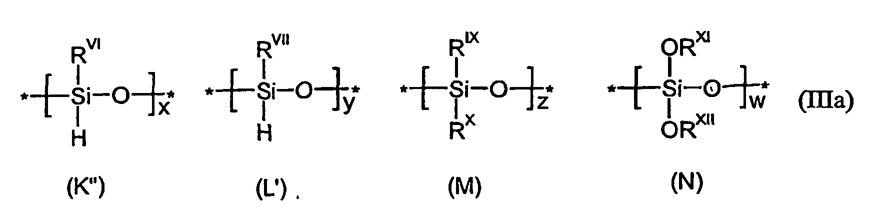 herstellen, wobei die Reste die bereits genannte Bedeutung besitzen, sowie für x + y, z und w die genannten Einschränkungen gelten.

Hier werden die Siloxane (III) und/oder (IIIa) mit Alkoholen und Dienen in Gegenwart eines Katalysators umgesetzt.

Als Alkohol kommt hierbei im Prinzip jeder dem Fachmann bekannte Alkohol in Betracht, beispielsweise seien genannt C₁-C₂₄-Alkohole, wie Methanol, Ethanol, Propanol, Butanol, Pentanol, Hexanol, Heptanol, Octanol, Decanol, Phenol, insbesondere Methanol, Ethanol, Propanol und Butanol, ganz besonders bevorzugt Ethanol und Propanol.

Als Dien werden die R^{V} entsprechenden Diene eingesetzt. Dies sind Limonen, Vinylcyclohexen, Ethylidennorbornen, Vinylnorbornen, C₄-C₂₄-Diene, insbesondere Butadien, Hexadien, Heptadien, Octadien und Bicyclopentadien.

Als Katalysator kommen sämtliche dem Fachmann bekannten Katalysatoren in Betracht, die die Substitution hydridischer Wasserstoffatome an Siliciumatomen durch Diene katalysieren, insbesondere Platin, Rhodium, Ruthenium oder Nickel, sowie deren Salze und/oder Komplexe.

Der Katalysator wird in Mengen im Bereich von 1-100 ppm Metall bezogen auf die Gesamtmenge Dien und Siloxan, bevorzugt 5 bis 500 ppm, besonders bevorzugt 10-50 ppm eingesetzt.

Das Verhältnis von OR" zu R^{V} wird durch das stöchiometrische Verhältnis des Alkohols zu Dien sowie die Reihenfolge der Eduktzugabe bestimmt.

Die Siloxane (III) und/oder (IIIa) werden bevorzugt zuerst mit dem Alkohol und anschließend mit dem Dien umgesetzt. Weiterhin bevorzugt werden die Siloxane (III) gleichzeitig mit dem Alkohol und dem Dien umgesetzt.

Selbstverständlich ist es auch möglich, Gemische verschiedener Alkohole und/oder Gemische verschiedener Diene einzusetzen.

Die Reaktion wird bei Temperaturen im Bereich von -20 bis +200°C durchgeführt, bevorzugt 20-100°C.

Die Reaktion wird bei Drücken von 0 bis 50 bar durchgeführt, bevorzugt 0-5 bar.

Die Reaktion kann in jeder dem Fachmann bekannten für Hydrosilylierungen geeigneten Apparatur durchgeführt werden.

Die Reaktionsprodukte werden gegebenenfalls z.B. durch Destillation, gegebenenfalls unter vermindertem Druck, oder durch ein anderes geeignetes Verfahren gereinigt, um überschüssige, nicht umgesetzte Stoffe sowie Nebenprodukte abzutrennen.

Ein weiterer Gegenstand der Erfindung ist die Verwendung der schwefelhaltigen Siloxane der allgemeinen Formel (I) und/oder (Ia) und der Siloxane der allgemeinen Formel (II) und/oder (IIa) in kieselsäurehaltigen Kautschukmischungen.

Zusätzlich ein weiterer Gegenstand der Erfindung ist eine Mischung aus den erfindungsgemäßen schwefelhaltigen Siloxanen der allgemeinen Formel (I) und/oder (Ia) mit Siloxanen und/oder schwefelhaltigen Silanen des Standes der Technik. Es kommen hierbei z.B. die in US-A 4 100 172, EP-A 1 466 066, DE-A 2 837 117, DE-A 2 933 247, US-A 4 474 908, JP-A 6 248 116, EP-A 1 761 748 und EP-A 1 784 072 beschriebenen Siloxane und/oder schwefelhaltige Silane in Betracht.

Die schwefelhaltigen Siloxane (I) und/oder (Ia) können auch im Gemisch mit den Siloxanen (II) und/oder (IIa) eingesetzt werden.

Werden die Siloxane der allgemeinen Formel (II) und/oder (IIa) ohne die schwefelhaltigen Siloxane der allgemeinen Formel (I) und/oder (Ia) verwendet, müssen ferner schwefelhaltige Alkoxysiloxane, die mindestens einen Alkoxyrest im Molekül besitzen, der in der Lage ist, mit den Si-OH-Gruppen der Kieselsäureoberfläche unter den Mischbedingungen zu reagieren, und mindestens einen schwefelhaltigen Rest im Molekül tragen, der in der Lage ist, unter den Misch- oder Vulkanisationsbedingungen mit dem ungesättigten Kautschuk zu reagieren, eingesetzt werden.

Bevorzugte schwefelhaltige Alkoxysilane sind in diesem Falle insbesondere Bis-(trialkoxisilyl-alkyl)-polysulfide, wie in DE 2 141 159 und DE-AS 2 255 577 beschrieben, oligomere und/oder polymere schwefelhaltige Alkoxysilane der DE-OS 4 435 311 und EP-A 670 347.

Die schwefelhaltigen Alkoxysilane werden dann in Mengen von 0,1 bis 20 Gew.-Teile, bevorzugt 0,5 bis 10 Gew.-Teilen bezogen auf 100 Gew.-Teile Kautschuk eingesetzt.

Als Kieselsäuren werden für die kieselsäurehaltigen Kautschukmischungen eingesetzt:
- Kieselsäuren, hergestellt durch Fällung von Lösungen von Silikaten mit spez. Oberflächen von 30 bis 1 000, vorzugsweise 30 bis 400 m²/g (BET-Oberfläche) und mit Primärteilchengrößen von 10 bis 400 nm. Die Kieselsäuren können gegebenenfalls auch als Mischoxide mit anderen Metalloxiden wie Aluminium, Magnesium, Kalzium, Barium, Zink, Zirkonium, Titanoxiden vorliegen;
- Silikate, z.B. Aluminiumsilikat, Erdalkalisilikate, wie Magnesiumsilikat oder Kalziumsilikat, mit BET-Oberflächen von 30 bis 400 m²/g und Primärteilchendurchmesser von 10 bis 400 nm.

Derartige Produkte sind beispielsweise näher beschrieben in J. Franta, Elastomers and Rubber Compounding Materials, Elsevier 1989, Seiten 401-447.

Geeignete Kautschuke sind neben Naturkautschuk auch die bekannten Synthesekautschuke. Sie umfassen u.a. Polybutadien, Butadien/Acrylsäure-C₁₋₄-alkylester, Polychloropren, Polyisopren und Polyisopren-Copolymere, Styrol/Butadien-Copolymerisate mit Styrolgehalten von 1 bis 60, vorzugsweise 20 bis 50 Gew.-%, Styrol/Butadien-Copolymerisate mit 1-20 Gew. % weiteren polaren ungesättigten Monomeren, insbesondere Styrol/Butadien/Acrylnitril-Copolymerisate mit Styrolgehalten von 1 bis 40 % und Acrylnitrilgehalten bis 20 %, Isobutylen/Isopren-Copolymerisate, Butadien/Acrylnitril-Copolymere mit Acrylnitrilgehalten von 5 bis 60, vorzugsweise 10 bis 40 Gew.-%, teilhydrierter oder vollständig hydrierter NBR-Kautschuk, Ethylen/Propylen/Dien-Copolymerisate sowie Mischungen dieser Kautschuke.

Für die Herstellung von Kfz-Reifen mit Hilfe der erfindungsgemäßen schwefelhaltigen Siloxanen der allgemeinen Formel (I) oder Siloxanen der allgemeinen Formel (II) werden insbesondere Naturkautschuk, BR, SBR- und Styrol/Butadien/ Acrylnitril -Copolymere bevorzugt.

Bevorzugte Verhältnisse von Kautschuk zu Kieselsäure sind 100:10 bis 100:150, besonders bevorzugt 100:20 bis 100:100.

Darüber hinaus können Ruße und die üblichen Kautschukhilfsmittel, wie z.B. Stabilisatoren, Formtrennmittel, Weichmacher etc. zugesetzt werden.

Die Mengen der zugesetzten Kautschukhilfsmittel richtet sich nach dem jeweiligen Verwendungszweck. Bevorzugte Mengen an Rußen liegen bei 0 bis 30 Gew.-Teile, Stabilisatormengen liegen bei 0,1 bis 1,5 Gew.-Teilen, Weichmachermengen liegen bei 5 bis 75 Gew.-Teilen bezogen auf 100 Gew.-Teile Kautschuk. Unter Mineralölweichmachem sind paraffinische, naphthenische oder aromatische Mineralöle zu verstehen mit VDK-Zahlen (Viskositäts-Dichte-Konstanten) von 0,791 bis 1,050, vorzugsweise 0,85 bis 1,0, und Refraktionsinterzepten Rⱼ von ca. 1,048 bis 1,065. Derartige Mineralölweichmacher sind im Handel erhältlich. Bevorzugte Weichmacher sind aromatische Mineralölweichmacher.

Den Kautschukmischungen können auf herkömmliche Art und Weise, z.B. mittels Kneter, Walze oder Extruder hergestellt werden.

Gegebenenfalls können die Kautschukmischungen noch weitere Füllstoffe enthalten, wie
- natürliche Silikate, wie Kaolin und andere natürlich vorkommende Kieselsäuren;
- Glasfasern und Glasfaserprodukte (Matten, Stränge) oder Mikroglaskugeln;
- Metalloxide, wie Zinkoxid, Calciumoxid, Magnesiumoxid, Aluminiumoxid;
- Metallcarbonate, wie Magnesiumcarbonat, Calciumcarbonat, Zinkcarbonat;
- Metallhydroxide, wie z.B. Aluminiumhydroxid, Magnesiumhydroxid;
- Ruße; die hierbei zu verwendenden Ruße sind nach dem Flammruß, Furnace- oder Gasrußverfahren hergestellt und besitzen BET-Oberflächen von 20 bis 200 m²/g, wie z.B. SAF-, ISAF-, HAF-, FEF- oder GPF-Ruße.

Besonders bevorzugt werden hochdisperse gefällte Kieselsäuren und Ruße eingesetzt. Die genannten Füllstoffe können alleine oder im Gemisch eingesetzt werden.

Den Kautschukmischungen können darüber hinaus weitere Kautschuke auf herkömmliche Art und Weise zugemischt werden: Für die Herstellung von Kfz-Reifen sind insbesondere Naturkautschuk, Emulsions-SBR sowie Lösungs-SBR-Kautschuke mit einer Glastemperatur oberhalb von -50°C, die gegebenenfalls mit Alkoxysilan oder anderen funktionellen Gruppen, modifiziert sein können, wie z.B. in der EP-A 447 066 beschrieben, Polybutadienkautschuke mit hohem 1,4-cis-Gehalt (>90 %), die mit Katalysatoren auf Basis Ni, Co, Ti oder Nd hergestellt werden, sowie Polybutadienkautschuke mit einem Vinylgehalt von 0 bis 75 % sowie deren Mischungen von Interesse. Ganz besonders bevorzugt werden Lösungs-SBR-Kautschuke mit einem Vinylgehalt von 20 bis 60 Gew.-% sowie Polybutadienkautschuke mit hohem 1,4-cis-Gehalt (>90 %) eingesetzt.

Die Kautschukmischungen können selbstverständlich auch noch weitere Kautschukhilfsprodukte enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren wie Triethanolamin, Polyethylenglykol, Hexantriol, die in der Gummiindustrie bekannt und üblich sind. Die Kautschukhilfsmittel werden in üblichen Mengen zugemischt und richten sich nach dem jeweils beabsichtigten Verwendungszweck. Übliche Mengen sind beispielsweise Mengen von 0,1 bis 50 Gew.-%, bezogen auf die Gesamtmenge des eingesetzten Kautschuks.

Neben den zuvor erwähnten Kautschukhilfsprodukten können den erfindungsgemäßen Kautschukmischungen die bekannten Vernetzer zugegeben werden, wie Schwefel, Schwefelspender oder Peroxide. Darüber hinaus können die erfindungsgemäßen Kautschukmischungen Vulkanisationsbeschleuniger enthalten, wie Mercaptobenzthiazole, Mercaptosulfenamide, Guanidine, Thiurame, Dithiocarbamate, Thiohamstoffe und/oder Thiocarbonate. Die Vulkanisationsbeschleuniger und die erwähnten Vernetzer werden üblicherweise in Mengen von 0,1 bis 10 Gew.-%, bevorzugt 0,1 bis 5 Gew.-%, bezogen auf die Gesamtmenge des jeweils eingesetzten Kautschuks, eingesetzt.

Die Vulkanisation der erfindungsgemäßen Kautschukmischungen kann bei üblichen Temperaturen von 100 bis 200°C, bevorzugt 130 bis 180°C (gegebenenfalls unter Druck 10 bis 200 bar), erfolgen.

Die weitere Abmischung der Kautschuke mit den anderen erwähnten Kautschukhilfsprodukten, Vernetzern und Beschleunigern kann in üblicher Weise mit Hilfe von geeigneten Mischaggregaten, wie Walzen, Innenmischer und Mischextruder, durchgeführt werden.

Die hieraus herstellbaren Kautschukvulkanisate eignen sich zur Herstellung von Formkörpern aller Art, z.B. für die Herstellung von Kabelmänteln, Schläuchen, Treibriemen, Förderbändern, Walzenbelägen, Schuhsohlen, Dichtungsringen und Dämpfungselementen. Insbesondere eignen sie sich für die Herstellung von Reifen, da solche Reifen einen besonders niedrigen Rollwiderstand, eine besonders gute Naßrutschfestigkeit und einen hohen Abriebwiderstand aufweisen.

Die folgenden Beispiele erläutern die Erfindung näher.

### Beispiele

Bei den Kautschukpolymeren und Chemikalien handelt es sich um Handelsprodukte der Bayer AG Geschäftsbereich Kautschuk, wenn nicht anders angegeben. Die gummimechanischen Prüfungen wurden nach DIN 53523, 53504, 53505, 53512, 53513 und ASTM D 2084 durchgeführt.

### Beispiel 1: Herstellung der schwefelhaltigen Siloxane der allgemeinen Formel (I) bzw. (Ia)

### Beispiel 1a:

In einem Vierhalskolben, Stickstoffeinleitung, Thermometer, Rührer und einem Rückflußkühler mit angeschlossenem Gaswäscher (beschickt mit 750 ml 30%iger wässriger NaOH) legte man unter Stickstoffatmosphäre 250 g des Alkenylalkoxysiloxansgemisches

| **Mol-%** | **Chemischer Name** |
|---|---|
| 11 | Tetraethoxysilan |
| 6,8 | Methyl-(2-cyclohexenyl-ethyl)-diethoxy-silan |
| 24,9 | 1-Methyl-1-(2-cyclohexenyl-ethyl)-1,3,3,3-tetraethoxy-disiloxan |
| 13 | 2-Methyl-2-(2-cyclohexenyl-ethyl)-1,1,1,5,5,5-hexaethoxy-trisioloxan |
| 8,4 | 1,3-Dimethyl-1,3-bis-(2-cyclohexenyl-ethyl)-1,3-diethoxy-disiloxan |
| 17,4 | 1,3-Dimethyl-1,3-bis-(2-cyclohexenyl-ethyl)-1,5,5,5-tetraethoxytrisiloxan |
| 7,5 | 3,5-Dimethyl-3,5-bis-(2-cyclohexenyl-ethyl)-1,1,1,5,5,5-hexaethoxytetrasiloxan |
| 4,2 | 1,3,5-Trimethyl-1,3,5-tris-(2-cyclohexenyl-ethyl)-1,3-diethoxytrisiloxan |
| 6,8 | 1,3,5-Trimethyl-1,3,5-tris-(2-cyclohexenyl-ethyl)-1,7,7,7-tetraethoxytetrasiloxan |

mit einem Doppelbindungsgehalt von 3,47 mmol /g vor (¹H-NMR).

Dazu gab man bei zunächst 25°C 83,4 g (2,60 mol) Schwefel sowie 0,8 g tert.-Dodecylamin und 1,7 g Mercaptobenzthiazol.

Das Gemisch wurde dann auf 150°C erwärmt und 1,5 h bei 150°C sowie leichtem Unterdruck von 800 hPa gehalten. Anschließend entfernte man gasförmige Bestandteile, in dem man über 45 min bei 90°C sowie 20-30 hPa entgaste. Man belüftete das Rohprodukt mit Stickstoff und ließ es auf Raumtemperatur abkühlen. Anschließend wurde es mit getrocknetem Toluol im Mischungsverhältnis 1:1 (Volumenteilen) versetzt und 8h stehengelassen.

Den ausgefallenen Schwefel saugte man ab und wusch ihn mit etwas getrocknetem Toluol auf einer geschlossenen Nutsche. Das gewünschte Siloxan wurde erhalten, nach dem man die vereinigten Toluolfraktionen vollständig in einem Rotationsverdampfer bei 50°C und 20 mbar eindampfte. Man erhielt 280,1 g Produkt mit einem Schwefelgehalt von 19,9 %. Der Schwefelgehalt wurde bestimmt mittels Elementaranalyse. Die Viskosität betrug 1776 mPas bei 23 °C und wurde bestimmt mittels Brookfiled Rotationsviskosimeter.

Der Versuch zeigt, dass gelfreies Material entstanden ist. Es ist offensichtlich, dass es bei Erhöhung der Alkenylgruppen pro Si-Kette zur Vergelung kommen kann.

Dieser Zusammenhang wird durch folgende Beispiele weiter verdeutlicht:

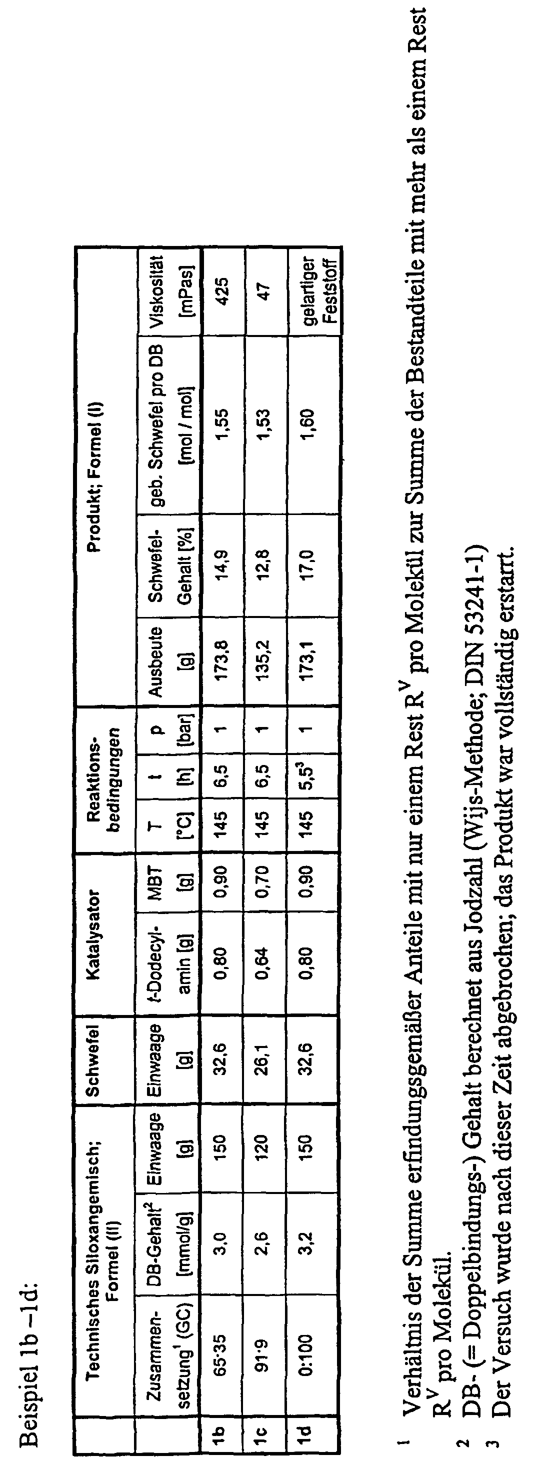

Die Versuche zeigen, daß zur Herstellung gelfreier, flüssiger schwefelhaltiger Oligosiloxane ein hoher Gehalt an erfindungsgemäßen Verbindungen mit nur einem doppelbindungshaltigen Rest pro Siloxankette vorteilhaft ist.

Vergelte Produkte sind im Kautschukmischprozeß nur eingeschränkt nutzbar, da sie größere, undefinierte, bzw. wechselnde Mengen Schwefel einschließen können und nicht-homogene Kautschukmischungen ergeben.

### Beispiel 2

Mischungsherstellung:
In einem 1,5 l Innenmischer der Fa. Werner & Pfleiderer (Modell GK 1.5 E) legte man die Bestandteile Polymere, Füllstoffe sowie Additive in folgender Weise vor:

| | Mischzeit in min |
|---|---|
| Polymer | 0,5 min |
| Füllstoff, Alterungsschutzmittel, ZnO, | |
| Wachs, Silan, Öl | 3,0 min |
| Dispergieren | 1,5 min |
| Stempel fegen | 0,25 min |
| Mischen | 1,25 min |
| | Gesamtmischzeit 6,5 min |

Die Ausstoßtemperatur lag bei 140-160 °C

Danach wurde die Mischung auf einer Walze abgekühlt und anschließend nochmals 3,5 min in dem Kneter gemischt. Anschließend mischte man Schwefel und Beschleuniger bei ca. 60 bis 90 °C nachträglich auf einer Walze hinzu.

### Eingesetzte Komponenten:

- **Si 69**: Bis (triethoxysilylpropyl) tetrasulfan der DEGUSSA-Hüls AG
- **Vulkanox® 4020**: Phenylendiamin Produkt der Bayer AG
- **Vulkanox® HS**: Dihydrochinolin (polymerisiert) Produkt der Bayer AG
- **Vulkacit ® CZ**: Sulfenamid Produkt der Bayer AG
- **Vulkacit ® D**: Diphenylguanidin Produkt der Bayer AG
- **Enerthene 1849-1**: BP Deutschland GmbH
- **Antilux® 654**: paraffinisches Mikrowachs Produkt der Rhein Chemie Rheinau
- **Vulkasil® S**: gefällte Kieselsäure Produkt der Bayer AG
- **Buna® VSL 5025**: SSBR Produkt der Bayer AG
- **Buna ® CB 24**: Polybutadien Produkt der Bayer AG
- **Corax N 339**: Ruß der Degussa AG
- **Stearinsäure**: Produkt der Henkel KgaA
- **ZnO RS**: Produkt der Zinkweiß Forschungsgesellschaft

Die jeweilige Mischungszusammensetzung ist in der folgenden Tabelle 1 angegeben:

**Tabelle 1**

| **Beispiel 2** | **a** | **b** |
|---|---|---|
| Buna VSL 5025-1 | 96 | 96 |
| Buna CB 24 | 30 | 30 |
| Corax N 339 | 6,5 | 6,5 |
| Vulkasil S | 80 | 80 |
| Stearinsäure | 1 | 1 |
| ZnO RS | 2,5 | 2,5 |
| Enerthene 1849-1 | 8 | 8 |
| Vulkanox 4020 | 1 | |
| Vulkanox HS | 1 | 1 |
| Antilux 654 | 1,5 | 1,5 |
| Schwefel | 1,5 | 1,5 |
| Vulkacit CZ | 1,5 | 1,5 |
| Vulkacit D | 2 | 2 |
| Si 69 | 6,5 | |
| Produkt Beispiel 1 | | 6,5 |

### Prüfkörperherstellung:

Die Herstellung diverser Prüfkörper erfolgte in einer für den Fachmann üblichen Weise in einer Preßvulkanisation bei 160°C.

Anschließend stanzte man in üblicher Weise Prüfkörper aus diesen Platten, um die in Tab. II b genannten gummimechanischen Prüfungen durchzuführen.

Die gummimechanischen Eigenschaften der Mischungen 2a-b sind in der folgenden Tabelle 2 aufgeführt:

**Tabelle 2**

| **Beispiel 2** | | **a** | **b** |
|---|---|---|---|
| ME (DIN 53 523) | ME | 78,9 | 88,1 |
| 5ME+min | Min | 15 | 12,8 |
| | | | |
| ts 01 | min | 0,33 | 0,18 |
| t90 | min | 16,40 | 19,38 |
| | | | |
| M 100 % (DIN 53 504) | Mpas | 2,7 | 2,1 |
| M 300 % (DIN53 504) | Mpas | 10,5 | 8,9 |
| Zugfestigkeit (DIN 53 504) | Mpas | 18,8 | 20,2 |
| Dehnung (DIN 53 504) | Mpas | 470 | 540 |
| Härte 23°C (DIN 53 505) | °Sha | 72 | 68 |
| Härte 70°C (DIN 53 505) | °Sha | 68 | 64 |
| RP 23°C (DIN 53 512) | | 27 | 26 |
| RP 70°C (DIN 53 512) | | 50 | 50 |
| | | | |
| WRF DIN 53 515 23°C | N/mm | 53 | 42 |
| | | | |
| Abrieb DIN 53 516 | mm³ | 87 | 86 |
| | | | |
| Dämpfung DIN 53 513 | | | |
| Roelig | | | |
| tan δ 0°C | | 0,384 | 0,424 |
| tan δ 60°C | | 0,164 | 0,154 |

Als Kriterien für Vulkanisate, um geringen Rollwiderstand und andere optimierte Reifeneigenschaften zu erzielen, gelten allgemein eine geringe mechanische Dämpfung (tan δ) bei 60°C, sowie eine starke Änderung des tan δ-Wertes zwischen 0- 60 °C.

Die erfindungsgemäßen Mischungen weisen gegenüber dem Stand der Technik folgende Vorteile auf:
1. höherer Verstärkungseffekt (Verhältnis Modul 300/Modul 100);
2. gleicher Abrieb;
15. niedrigerer tan delta bei 60°C und deshalb niedrigerer Rollwiderstand.

## Patentansprüche

1. Schwefelhaltige Siloxane der allgemeinen Formel (I) 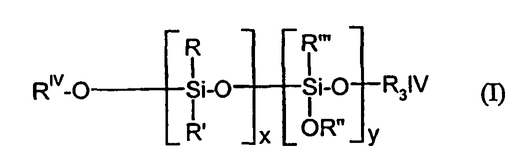 worin
R und R" unabhängig voneinander für einen C₁-C₂₄-Alkylrest, einen C₆-C₂₄-Arylrest oder R'" steht,
R' für einen schwefelhaltigen 2-(p-Methylcyclohexyl)propylrest, einen schwefelhaltigen 2-Cyclohexylethylrest, einen schwefelhaltigen 2-Norbornylethylrest, einen schwefelhaltigen 2-Norbornylpropylrest, einen schwefelhaltigen C₄-C₂₄-Alkylrest oder einen schwefelhaltigen Dicyclopentylrest steht,
R''' für R, OR oder H steht, wobei die Reste R und R''' gleich oder verschieden sein können,
R^{IV} für R, SiR₃''' oder H steht, wboei die Reste R, R''' und R^{IV} gleich oder verschieden sein können,
die Summe von x und y eine Zahl im Bereich von 2 bis 200 darstellt,
mit der Maßgabe, daß stets nur ein Rest R' pro Siloxan-Molekül vorhanden ist.

2. Verfahren zur Herstellung von schwefelhaltigen Siloxanen gemäß Anspruch 1, **dadurch gekennzeichnet, daß** man Siloxane der allgemeinen Formel (II) 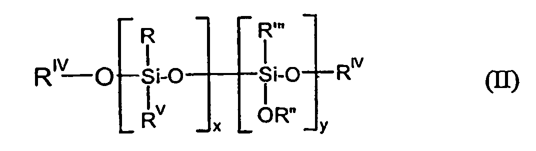 wobei
R, R", R'" und R^{IV} die bereits genannten Reste darstellen und
R^{V} für einen Limonylrest, einen Ethylencyclohexenrest, einen Ethylennorbornenylrest bzw. Norbornylethyliden-, bzw. Norbornylvinylrest, einen C₄-C₂₄-Alkenylrest oder einen Bicyclopentenylrest steht und
für die Summe von x und y die bereits definierte Einschränkung gilt, mit der Maßgabe, dass stets nur ein Rest R^{V} pro Molekül vorhanden ist,
mit Schwefel oder mit Schwefel und Schwefelwasserstoff jeweils in Gegenwart eines Katalysators umsetzt.

3. Verfahren gemäß Anspruch 2, **dadurch gekennzeichnet, daß** man den Schwefel in Mengen im Bereich von 1 bis 8 Mol pro Mol R^{V} einsetzt.

4. Verfahren gemäß Anspruch 2, **dadurch gekennzeichnet, daß** man ein Gemisch aus Schwefel und Schwefelwasserstoff in Mengen im Bereich von 1 bis 8 Mol Gesamtschwefel pro Mol R^{V} einsetzt.

5. Verfahren gemäß Anspruch 2, **dadurch gekennzeichnet, daß** man ein Gemisch aus Schwefel und Schwefelwasserstoff im Verhältnis von 1:0,01 bis 1 einsetzt.

6. Verfahren gemäß Anspruch 2, **dadurch gekennzeichnet, daß** man als Katalysator Amine oder Dischwefeldichlorid oder Mercaptobenzthiazol einsetzt.

7. Verfahren gemäß Anspruch 2, **dadurch gekennzeichnet, daß** man den Katalysator in Mengen im Bereich von 0,001 bis 0,1 Mol pro Mol Schwefel einsetzt.

8. Mischungen aus schwefelhaltigen Siloxanen gemäß Anspruch 1 mit Siloxanen und/oder schwefelhaltigen Silanen.

9. Verwendung von schwefelhaltigen Siloxanen gemäß Anspruch 1 in kieselsäurehaltigen Kautschukmischungen.

10. Verwendung gemäß Anspruch 9, **dadurch gekennzeichnet, dass** die kieselsäurehaltigen Kautschukmischungen Kieselsäuren mit BET-Oberflächen von über 30 m²/g und gegebenenfalls Ruße enthalten.

11. Schwefelhaltige Siloxane der allgemeinen Formel (Ia), aufgebaut aus den Struktureinheiten (K), (L), (M), (N) 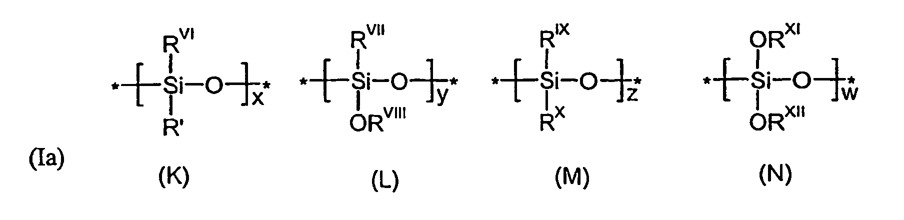 worin
R' für einen schwefelhaltigen 2-(p-Methylcyclohexyl)propylrest, einen schwefelhaltigen 2-Cyclohexylethylrest, einen schwefelhaltigen 2-Norbornylethylrest, einen schwefelhaltigen 2-Norbornylpropylrest, einen schwefelhaltigen C₄-C₂₄-Alkylrest oder einen schwefelhaltigen Dicyclopentylrest steht,
R^{VI} für einen C₁-C₂₄-Alkylrest, einen C₆-C₂₄-Arylrest, einen C₁-C₂₄-Alkoxyrest, einen C₆-C₂₄-Aryloxyrest, H oder OH steht,
R^{VII}, R^{VIII}, R^{IX}, R^{X}, R^{XI} und R^{XII} unabhängig voneinander für einen C₁-C₂₄-Alkylrest, einen C₆-C₂₄-Arylrest oder H steht,
die Summe von x und y eine Zahl im Bereich von 2 bis 200 darstellt, w und z jeweils unabhängig voneinander eine Zahl zwischen 0 und 100 sein kann,
mit der Maßgabe, dass stets nur ein Rest R' pro Siloxan-Molekül vorhanden ist.

12. Verfahren zur Herstellung von schwefelhaltigen Siloxanen gemäß Anspruch 11, **dadurch gekennzeichnet, dass** man Siloxane der allgemeinen Formel (IIa), aufgebaut aus den Struktureinheiten (K'), (L), (M), (N) 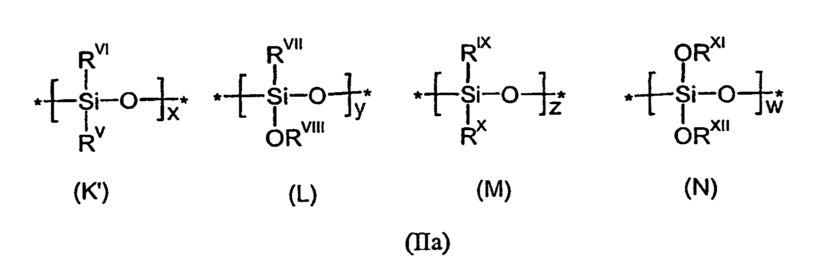 wobei
R^{VI}, R^{VII}, R^{VIII}, R^{IX}, R^{X}, R^{XI} und R^{XII} die bereits genannten Reste darstellen und
R^{V} für einen Limonylrest, einen Ethylencyclohexenrest, einen Ethylennorbornenylrest bzw. Norbornylenethyliden-, bzw. Norbornylvinylrest, einen C₄-C₂₄-Alkenylrest oder einen Bicyclopentenylrest steht und
für die Summe von x und y, sowie für w und z die bereits genannten Einschränkungen gelten, mit der Maßgabe, dass stets nur ein Rest R^{V} pro Molekül vorhanden ist, mit Schwefel oder Schwefel und Schwefelwasserstoff jeweils in Gegenwart eines Katalysators umsetzt.

13. Verfahren gemäß Anspruch 12, **dadurch gekennzeichnet, daß** man den Schwefel in Mengen im Bereich von 1 bis 8 Mol pro Mol R^{V} einsetzt.

14. Verfahren gemäß Anspruch 12, **dadurch gekennzeichnet, daß** man ein Gemisch aus Schwefel und Schwefelwasserstoff in Mengen im Bereich von 1 bis 8 Mol Gesamtschwefel pro Mol R^{V} einsetzt.

15. Verfahren gemäß Anspruch 12, **dadurch gekennzeichnet, daß** man ein Gemisch aus Schwefel und Schwefelwasserstoff im Verhältnis von 1:0,01 bis 1 einsetzt.

16. Verfahren gemäß Anspruch 12, **dadurch gekennzeichnet, daß** man als Katalysator Amine oder Dischwefeldichlorid oder Mercaptobenzthiazol einsetzt.

17. Verfahren gemäß Anspruch 12, **dadurch gekennzeichnet, daß** man den Katalysator in Mengen im Bereich von 0,001 bis 0,1 Mol pro Mol Schwefel einsetzt.

18. Mischungen aus schwefelhaltigen Siloxanen gemäß Anspruch 11 mit Siloxanen und/oder schwefelhaltigen Silanen.

19. Verwendung von schwefelhaltigen Siloxanen gemäß Anspruch 11 in kieselsäurehaltigen Kautschukmischungen.

20. Verwendung gemäß Anspruch 19, **dadurch gekennzeichnet, dass** die kieselsäurehaltigen Kautschukmischungen Kieselsäuren mit BET-Oberflächen von über 30 m²/g und gegebenenfalls Ruße enthalten.

## Claims

1. Sulphur-containing siloxanes of the general formula (I) 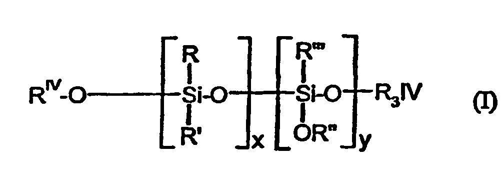 wherein
R and R" independently of one another represent a C₁-C₂₄-alkyl radical, a C₆-C₂₄-aryl radical or R'", R' represents a sulphur-containing 2-(p-methylcyclohexyl)propyl radical, a sulphur-containing 2-cyclohexylethyl radical, a sulphur-containing 2-norbornylethyl radical, a sulphur-containing 2-norbornylpropyl radical, a sulphur-containing C₄-C₂₄-alkyl radical or a sulphur-containing dicyclopentyl radical,
R'" represents R, OR or H, wherein the radicals R and R'" can be identical or different,
R^{IV} represents R, SiR₃'" or H, wherein the radicals R,
R'" and R^{IV} can be identical or different,
the sum of x and y is a number in the range from 2 to 200,
with the proviso that always only one radical R' is present per siloxan molecule.

2. Process for the preparation of sulphur-containing siloxanes according to Claim 1, **characterized in that** siloxanes of the general formula (II) 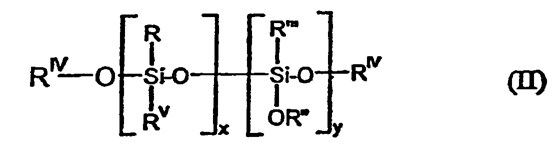 wherein
R, R", R"' and R^{IV} represent the radicals already mentioned and
R^{V} represents a limonyl radical, an ethylenecyclohexene radical, an ethylenenorbornenyl radical or norbornylethylidene or norbornylvinyl radical, a C₄-C₂₄-alkenyl radical or a bicyclopentenyl radical and
the restriction already defined applies to the sum of x and y, with the proviso that always only one radical R^{V} is present per molecule,
are reacted with sulphur or with sulphur and hydrogen sulphide, in each case in the presence of a catalyst.

3. Process according to Claim 2, **characterized in that** sulphur is employed in amounts in the range from 1 to 8 mol per mol of R^{V}.

4. Process according to Claim 2, **characterized in that** a mixture of sulphur and hydrogen sulphide in amounts in the range from 1 to 8 mol of total sulphur per mol of R^{V} is employed.

5. Process according to Claim 2, **characterized in that** a mixture of sulphur and hydrogen sulphide in a ratio of 1: (0.01 to 1) is employed.

6. Process according to Claim 2, **characterized in that** amines or disulphur dichloride or mercaptobenzothiazole are employed as the catalyst.

7. Process according to Claim 2, **characterized in that** the catalyst is employed in amounts in the range from 0.001 to 0.1 mol per mol of sulphur.

8. Mixtures of sulphur-containing siloxanes according to Claim 1 with siloxanes and/or sulphur-containing silanes.

9. Use of sulphur-containing siloxanes according to Claim 1 in silica-containing rubber mixtures.

10. Use according to Claim 9, **characterized in that** the silica-containing rubber mixtures comprise silicas with BET-surface areas of more than 30 m²/g and optionally carbon blacks.

11. Sulphur-containing siloxanes of the general formula (Ia), composed of the structural units (K), (L), (M), (N) 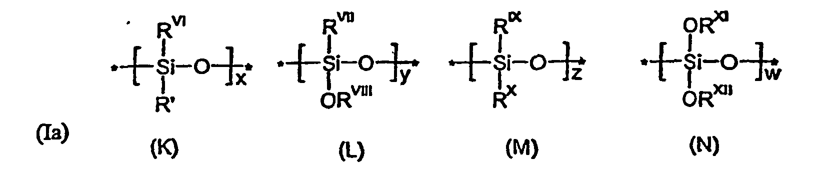 wherein
R' represents a sulphur-containing 2-(p-methylcyclohexyl)propyl radical, a sulphur-containing 2-cyclohexylethyl radical, a sulphur-containing 2-norbornylethyl radical, a sulphur-containing 2-norbornylpropyl radical, a sulphur-containing C₄-C₂₄-alkyl radical or a sulphur-containing dicyclopentyl radical,
R^{VI} represents a C₁-C₂₄-alkyl radical, a C₆-C₂₄-aryl radical, a C₁-C₂₄-alkoxy radical, a C₆-C₂₄-aryloxy radical, H or OH,
R^{VII}, R^{VIII}, R^{IX}, R^{X}, R^{XI} and R^{XII} independently of one another represent a C₁-C₂₄-alkyl radical, a C₆-C₂₄-aryl radical or H,
the sum of x and y represents an integer in the range from 2 to 200 and w and z each independently of one another can be an integer between 0 and 100,
with the proviso that always only one radical R' is present per siloxane molecule.

12. Process for preparing sulphur-containing siloxanes according to Claim 11, **characterized in that** siloxanes of the general formula (IIa) composed of the structural units (K'), (L), (M), (N) 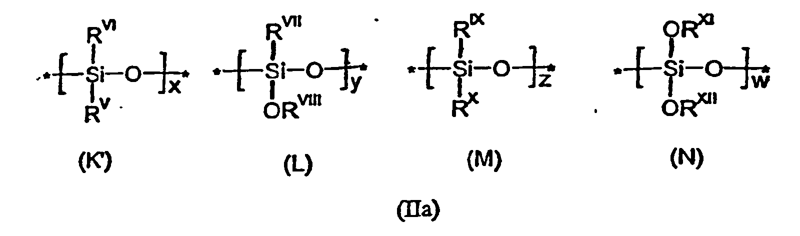 wherein
R^{VI}, R^{VII}, R^{VIII}, R^{IX}, R^{X}, R^{XI} and R^{XII} represent the radicals already mentioned, and
R^{V} represents a limonyl radical, an ethylenecyclohexene radical, an ethylenenorbornenyl radical or a norbornylethylidene or norbornyl-vinyl radical, a C₄-C₂₄-alkenyl radical or a bicyclopentenyl radical and the restrictions already mentioned apply to the sum of x and y and w and z, with the proviso that always only one radical R^{V} is present per molecule, are reacted with sulphur or sulphur and hydrogen sulphide in each case in the presence of a catalyst.

13. Process according to Claim 12, **characterized in that** sulphur is employed in amounts in the range from 1 to 8 mol per mol of R^{V}.

14. Process according to Claim 12, **characterized in that** a mixture of sulphur and hydrogen sulphide in amounts in the range from 1 to 8 mol of total sulphur per mol of R^{V} is employed.

15. Process according to Claim 12, **characterized in that** a mixture of sulphur and hydrogen sulphide in a ratio of 1:0.01 to 1 is employed.

16. Process according to Claim 12, **characterized in that** amines or disulphur dichloride or mercaptobenzothiazole are employed as the catalyst.

17. Process according to Claim 12, **characterized in that** the catalyst is employed in amounts in the range from 0.001 to 0.1 mol per mol of sulphur.

18. Mixtures of sulphur-containing siloxanes according to Claim 11 with siloxanes and/or sulphur-containing silanes.

19. Use of sulphur-containing siloxanes according to Claim 11 in silica-containing rubber mixtures.

20. Use according to Claim 19, **characterized in that** the silica-containing rubber mixtures contain silicas with BET surface areas of greater than 30 m²/g and optionally carbon blacks.

## Revendications

1. Siloxanes contenant du soufre de formule générale (I) 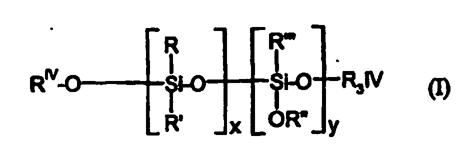 dans laquelle
R et R" désignent indépendamment l'un de l'autre un reste alkyle en C₁-C₂₄, un reste aryle en C₆-C₂₄ ou R"',
R' désigne un reste 2-(p-méthylcyclohexyl)propyle contenant du soufre, un reste 2-cyclohexyléthyle contenant du soufre, un reste 2-norbornyléthyle contenant du soufre, un reste 2-norbornylpropyle contenant du soufre, un reste alkyle en C₄-C₂₄ contenant du soufre ou un reste dicyclopentyle contenant du soufre,
R"' désigne R, OR ou H, les restes R et R"' pouvant être identiques ou différents,
R^{IV} désigne R, SiR₃"' ou H, les restes R, R"' et R^{IV} pouvant être identiques ou différents,
dans laquelle la somme de x et y représente un nombre de l'ordre de 2 à 200,
étant entendu que seul un reste R' est toujours présent par molécule de siloxane.

2. Procédé de préparation de siloxanes contenant du soufre selon la revendication 1, **caractérisé en ce que** l'on fait réagir des siloxanes de formule générale (II) 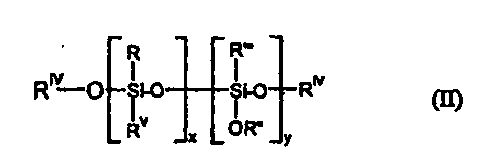 dans laquelle
R, R", R"' et R^{IV} représentent les restes précités et
R^{V} représente un reste limonyle, un reste éthylènecyclohexène, un reste éthylènenorbornényle ou norbornyléthylidène ou norbornylvinyle, un reste alcényle en C₄-C₂₄ ou un reste bicyclopentényle et
pour la somme de x et y, la restriction définie précédemment reste d'application étant entendu qu'un seul reste R^{V} est toujours présent par molécule,
avec du soufre ou avec du soufre et du sulfure d'hydrogène, respectivement en présence d'un catalyseur.

3. Procédé selon la revendication 2, **caractérisé en ce que** l'on utilise le soufre dans des quantités de l'ordre de 1 à 8 moles par mole de R^{V}.

4. Procédé selon la revendication 2, **caractérisé en ce que** l'on utilise un mélange de soufre et de sulfure d'hydrogène dans des quantités de l'ordre de 1 à 8 moles de soufre total par mole de R^{V}.

5. Procédé selon la revendication 2, **caractérisé en ce que** l'on utilise un mélange de soufre et de sulfure d'hydrogène dans une proportion de 1:0,01 à 1.

6. Procédé selon la revendication 2, **caractérisé en ce que** l'on utilise comme catalyseur des amines ou du dichlorure disulfurique ou du mercaptobenzothiazole.

7. Procédé selon la revendication 2, **caractérisé en ce que** l'on utilise le catalyseur dans des quantités de l'ordre de 0,001 à 0,1 mole par mole de soufre.

8. Mélanges de siloxanes contenant du soufre selon la revendication 1 avec des siloxanes et/ou des silanes contenant du soufre.

9. Mise en oeuvre de siloxanes contenant du soufre selon la revendication 1 dans des mélanges de caoutchouc contenant de l'acide silicique.

10. Mise en oeuvre selon la revendication 9, **caractérisé en ce que** les mélanges de caoutchouc contenant de l'acide silicique contiennent des acides siliciques avec des surfaces BET de plus de 30 m²/g et, éventuellement, de la suie.

11. Siloxanes contenant du soufre de formule générale (la), conçus à partir des unités structurelles (K), (L), (M), (N) 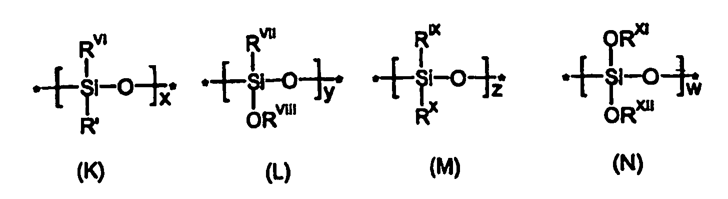 dans lesquelles
R' désigne un reste 2-(p-méthylcyclohexyl)propyle contenant du soufre, un reste 2-cyclohexyléthyle contenant du soufre, un reste 2-norbornyléthyle contenant du soufre, un reste 2-norbornylpropyle contenant du soufre, un reste alkyle en C₄-C₂₄ contenant du soufre ou un reste dicyclopentyle contenant du soufre,
R^{VI} désigne un reste alkyle en C₁-C₂₄, un reste aryle en C₆-C₂₄, un reste alcoxy en C₁-C₂₄, un reste aryloxy en C₆-C₂₄, H ou OH,
R^{VII}, R^{VIII}, R^{IX}, R^{X}, R^{XI} et R^{XII} désignent, indépendamment l'un de l'autre, un reste alkyle en C₁-C₂₄, un reste aryle en C₆-C₂₄ ou H,
la somme de x et y représentent un nombre de l'ordre de 2 à 200, w et z pouvant être respectivement un nombre de 0 et 100, indépendamment l'un de l'autre;
étant entendu qu'un seul reste R' est toujours présent par molécule de siloxane.

12. Procédé de préparation de siloxanes contenant du soufre selon la revendication 11, **caractérisé en ce que** l'on met en réaction des siloxanes de formule générale (IIa) composés des unités structurelles (K'), (L), (M), (N) 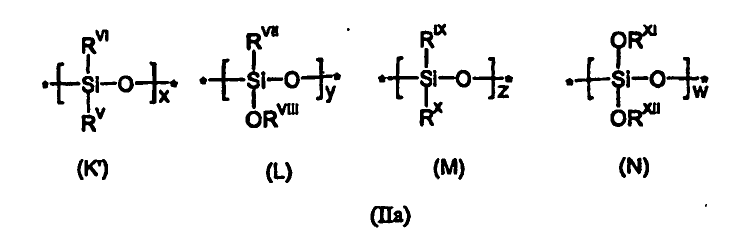 dans lesquelles
R^{VI}, R^{VII}, R^{VIII}, R^{IX}, R^{X}, R^{XI} et R^{XII} représentent les restes précités et
R^{V} représente un reste limonyle, un reste éthylènecyclohexène, un reste éthylènenorbornényle ou norbornyléthylidène ou norbornylvinyle, un reste alcényle en C₄-C₂₄ ou un reste bicyclopentényle et
pour la somme de x et y ainsi que pour w et z, les restrictions définies précédemment restent d'application étant entendu qu'un seul reste R^{V} est toujours présent par molécule,
avec du soufre ou avec du soufre et du sulfure d'hydrogène, toujours en présence d'un catalyseur.

13. Procédé selon la revendication 12, **caractérisé en ce que** l'on utilise le soufre dans des quantités de l'ordre de 1 à 8 moles par mole de R^{V}.

14. Procédé selon la revendication 12, **caractérisé en ce que** l'on utilise un mélange de soufre et de sulfure d'hydrogène dans des quantités de l'ordre de 1 à 8 moles de soufre total par mole de R^{V}.

15. Procédé selon la revendication 12, **caractérisé en ce que** l'on utilise un mélange de soufre et de sulfure d'hydrogène dans une proportion de 1:0,01 à 1.

16. Procédé selon la revendication 12, **caractérisé en ce que** l'on utilise comme catalyseur des amines ou du dichlorure disulfurique ou du mercaptobenzothiazole.

17. Procédé selon la revendication 12, **caractérisé en ce que** l'on utilise le catalyseur dans des quantités de l'ordre de 0,001 à 0,1 mole par mole de soufre.

18. Mélanges de siloxanes contenant du soufre selon la revendication 11 avec des siloxanes et/ou des silanes contenant du soufre.

19. Mise en oeuvre de siloxanes contenant du soufre selon la revendication 11 dans des mélanges de caoutchouc contenant de l'acide silicique.

20. Mise en oeuvre selon la revendication 19, **caractérisé en ce que** les mélanges de caoutchouc contenant de l'acide silicique contiennent des acides siliciques avec des surfaces BET de plus de 30 m²/g et, éventuellement, de la suie.
